# EUROPEAN PATENT SPECIFICATION

(11) **EP 2 741 958 B1**
(45) Date of publication and mention of the grant of the patent: **22.03.2017**
(21) Application number: 12759266.5
(22) Date of filing: 09.08.2012
(51) Int. Cl.: B64D 1/16

(54) **DELIVERING FLUIDS OR GRANULAR SUBSTANCES BY PROJECTING SHELLED PORTIONS THEREOF**
ABGABE VON FLÜSSIGKEITEN ODER GRANULATFÖRMIGEN STOFFEN DURCH ENTWURF VON UMSCHALUNGEN DAFÜR
DISTRIBUTION DE FLUIDES OU DE SUBSTANCES GRANULAIRES PAR PROJECTION DE PARTIES À ENVELOPPE DE CEUX-CI

(30) Priority: 12.08.2011 US 201161522693 P
(43) Date of publication of application: 18.06.2014
(73) Proprietor: Elbit Systems Ltd., 31053 Haifa (IL)
(72) Inventor: ALKAHER, Shlomo, 35703 Haifa (IL); ILAN-LIPOVSKY, Yoram, 69054 Tel-Aviv (IL)
(74) Representative: Pearl Cohen Zedek Latzer Baratz UK LLP
(86) International application number: PCT/IB2012/054058
(87) International publication number: WO 2013/024405

(56) References cited:
- WO-A1-03/063966
- WO-A2-01/87421
- WO-A2-2006/083558
- US-A- 5 668 346
- US-A1- 2003 010 185
- US-A1- 2009 302 164

## Description

### BACKGROUND

### 1. TECHNICAL FIELD

The present invention relates to the field of delivery of fluids and other materials over the air, and more particularly, to a remote ballistic delivery of fluids using aerial vehicles.

### 2. DISCUSSION OF RELATED ART

Aerial vehicles are used today in various missions of delivery of fluids and granular substances from the air. In some cases, delivery from the air is the only option either due to limited access or because of the effectiveness of the air delivery in covering large areas in a short time. Non-limiting examples for such mission include firefighting, fertilizing, cooling nuclear reactors as well as using herbicides and pesticides.

The main challenge in delivering fluids and granular substances, due to their particle nature, is the tendency of these materials to be greatly affected by air resistance. Specifically, large portions of the fluids transform into an aerosol which drifts by the wind and never reaches the target on the ground or above it. The aerosol may also affect the aerial vehicle or people on board it or on the ground. In a case that the fluid contains harmful ingredients, the aerosol or other buoyant particles can cause health problems or harm the aerial vehicle. Solid granular substances suffer from similar limitations and while they do not transform into aerosol their air resistance is sufficiently high so they lose their ballistic characteristics.

In order to avoid the aforementioned aerosol effect, aerial flights today are performed at low altitudes (less than 100 feet above ground). Such a flight profile is very risky, requires special aircrafts and special pilot skills. Because of those high requirements, current aerial missions can be performed nowadays only at day time and they are stopped altogether during the night, or in strong wind and low visibility conditions such as smoke, fog or dust.

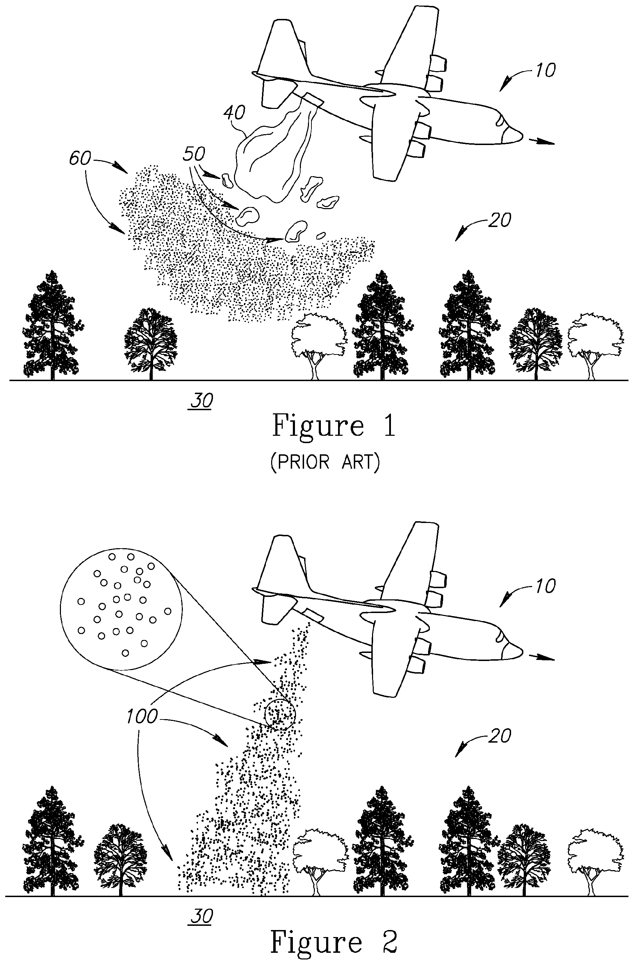

Figure 1 is a schematic illustration of an aerial vehicle 10 discharging fluid 40 from the air towards targets 20 such as trees on the ground 30. Due to the aforementioned air resistance, some portions 50 of the fluid are cut from the main bulk of fluid 40 while other portions of fluid 40 transform into aerosol 60. As the aerosol loses its ballistic character it becomes very difficult, if not impossible to deliver effective amounts of fluid 40 to ground 30 or targets 20. It is noted that the aforementioned problem becomes ever more challenging when air vehicle 10 is located higher up in the sky.

WO03/063966, which is considered being the closest prior art, discloses a method of fire retarding comprising packaging a fire retarding substance in a frangible package and dropping the frangible package from a flying aircraft onto a fire.

### BRIEF SUMMARY

One aspect of the present invention provides a method of delivering shelled portions of fluids or granular substances according to claim 1, containing required effective ingredients over the air to a target. The method includes the following stages: loading the required effective ingredients onto a vehicle in the form of shelled portions selected to have a type and size based on mission parameters and physical data of a scene containing the target; conveying the shelled portions in the vehicle to a delivery point, based on the mission parameters and the physical data; and ballistically delivering the shelled portions from the vehicle towards the target, wherein the shelled portions each weigh approximately 100 to 300 grams and comprise fluids or granular substances covered by shells that provide to the portions a ballistic coefficient that is significantly higher than a ballistic coefficient of similar portions without the shells.

The mission parameters may include any of the following: the required type of effective ingredients, the height of the target above sea level, the required height above the target above ground level (AGL), the required velocity of the aerial vehicle, the footprint and the distribution at the target, and meteorological effects such as wind velocity and direction around the aerial vehicle at the delivery point and/or the wind velocity and direction around the target.

Another aspect of the invention provides a system for delivering shelled portions according to claim 15.

Advantageously, embodiments of the present invention provide a solution to the aforementioned risky flight profile in order to address the aerosol effect. Embodiments of the present invention ensure safe flight in high altitude for common commercial transport airplanes and further enable to perform the mission at day or at night and in all weather conditions.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

The present invention will be more readily understood from the detailed description of embodiments thereof made in conjunction with the accompanying drawings of which:
Figure 1 is a schematic diagram showing fluid delivery from the air according to the existing art;
Figure 2 is a schematic diagram showing fluid and granular substances delivery from the air according to some embodiments of the present invention;
Figure 3 show cross-sectional views of several non-limiting examples for the shelled portions of the fluid or the granular substance according to some embodiments of the present invention;
Figure 4 is a schematic diagram illustrating one aspect according to some embodiments of the present invention;
Figure 5 is a schematic diagram illustrating one aspect according to some embodiments of the present invention;
Figure 6 is a high level flowchart illustrating a method according to some embodiments of the present invention;
Figure 7 is a schematic diagram showing an exemplary embodiment of an airborne dispenser of the shelled portions of fluids and granular substances in accordance with some embodiments of the present invention;
Figure 8 is a schematic diagram showing an exemplary application of some embodiments of the present invention;
Figure 9 is a schematic drawing illustrating yet another embodiment of the shelled portion in accordance with embodiments of the present invention;
Figure 10 is a schematic drawing illustrating an aerial vehicle equipped with a dispenser in accordance with embodiments of the present invention; and
Figure 11 is a schematic drawing illustrating a surface vehicle equipped with a dispenser in accordance with embodiments of the present invention.

### DETAILED DESCRIPTION

Prior to setting forth the detailed description, it may be helpful to set forth definitions of certain terms that will be used hereinafter.

The term "shelled portions" as used herein refers to portions of the effective substance, either in the form of a fluid, powder or granules that are packed by a shell, preferably but not necessarily a flexible shell that is charachterised by a ballistic coefficient that is significantly higher than the ballistic coefficient of similar portions of the effective substance or any other material which are not packed by the shells. The shelled portioned are manufactured so that they resemble in size, shape and weight so as to preserve ballistic properties of the shelled portions which contribute to the repeatability of the aerial delivery of theses shelled portions. These shelled portions may weigh each approximately 100 to 300 grams. The restrictions on the weight stem from the fact that proposed shelled portions should not be lethal upon impact with humans or animals. Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

Figure 2 is a schematic illustration of an aerial vehicle 10 discharging loads of shelled portions 100 of either fluids or granular substances from the air towards targets 20 such as trees on the ground 30. As shown, the shelled portions 100 are selected to be of a size that is sufficient to maintain their ballistic character. The actual size of theses shelled portions is very much a function of the height from which these shelled portions are projected, the weather conditions, and the purpose of the delivery of the fluid or granular substance. It is understood that diameter of 0.5 cm may be reasonable for low altitude missions (tens of meters) whereas shelled portions having a diameter of several centimeters will be required for higher altitudes (over 100 meter). It is noted that the aforementioned values are for demonstrative purposes only and should not be regarded as limiting the invention.

Consistent with some embodiments of the present invention, the shelled portions of effective ingredients are selected on a per-mission basis to have the size, weight and packaging material so that they are non-harmful upon impact with human beings or any objects at the target are, whenever avoiding harmful impact is a consideration. Put differently, both the selection of the shelled portion and the ballistic delivering of the shelled portions are carried out in view of avoiding harmful impact of the shelled portion in a case of human presence or any object presence near or at the target.

In order to protect the environment, the materials of the shells may be selected such that they do not pollute the ground or the air upon falling and breaking at the target.

Consistent with some embodiments of the present invention, the shelled portions are designed such that a dissemination effect of the liquid or granular substance is achieved by tearing, opening, or breaking of the shells upon hitting the target or object above the target.

The contents of the shelled portion may be determined and selected on an ad hoc basis. For fire fighting, a fire extinguishing material may be used. Pesticides, herbicides and fertilizers may be used in agricultural applications. The shell should merely keep the fluid or granular substance in a shape, possibly made of a flexible material, usually but not necessarily a sphere.

In accordance with some embodiments of the invention, the shells of the shelled portions 100 may be made of bio degradable materials, possibly compostable materials. By selecting the shells to be compostable materials, the shells are able to break down into carbon dioxide, water and biomass once reaching the target. Advantageously, shells made of compostable materials, may not produce any toxic material and very much like compost should be able to support plant life. In some embodiments, the shells may be made from plant materials such as corn, potato, cellulose, soy and sugar. In some embodiments, the shells are made of materials that break down possibly but not exclusively through the action of a naturally occurring microorganism over a period of several weeks - a period that is substantially shorter than the decomposing period of compostable materials.

It is however understood that other materials which are not compostable may be also used for shells, including but not limited to, polyester and the like. In some embodiments, the selection of the material for the shells is selected so that in the decomposing or breaking down process, or burning on a fire, neither toxic gases nor toxic fumes are released. The decomposing process may occur on the ground and may be accelerated by bacteria on the ground.

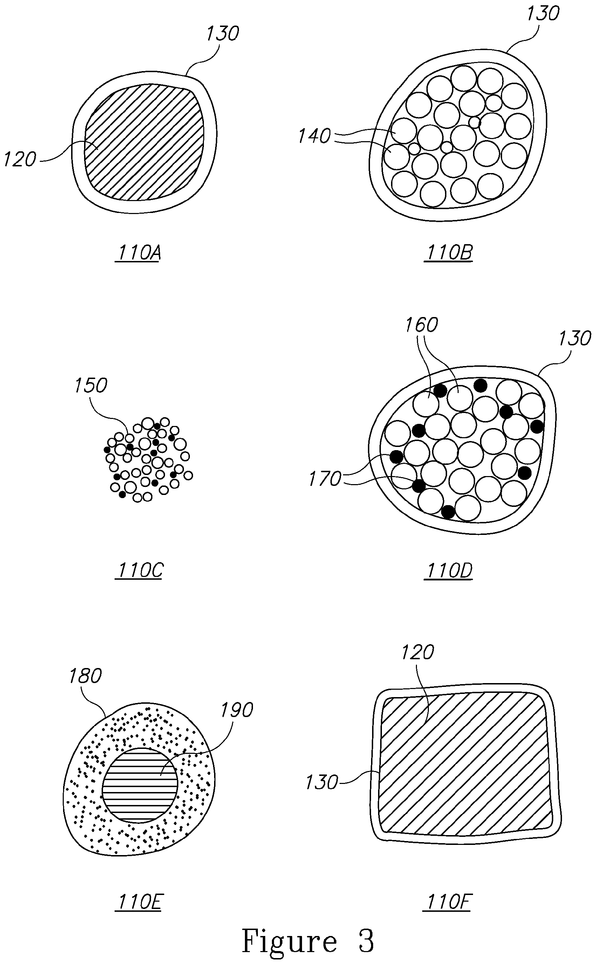

Figure 3 show cross-sectional views of several non-limiting examples for the shelled portions of the fluid or the granular substance according to some embodiments of the present invention. Shelled portion 110A includes a shell 130 and a homogenous fluid 120 that can be selected in accordance with the desired effect at the target. Shelled portion 110B includes a shell 130 and a granular substance 140 that can be either solid or frozen fluid or ice slurry. In a case of frozen fluid, the shelled portion 11B may be used to cool down the target on top of other effects. For example, iced granular substance may be tightly packed within a shell and be used to cool a nuclear reactor on the ground. Portion 110C may contain a portion (with or without a shell) of granular substance pressed together. Two or more ingredients may be used in combination so that a different effect is achieved at the target (e.g., due to mixing) or prior to hitting the target due to rotational forces. Additionally, at least one of the substances in the packed shell may be arranged to generate a gaseous substance or foam upon impact at target

Consistent with some embodiments, shelled portion 110D includes a shell 130 and a first granular substance 160 put together with a second granular substance 170 both can be either solid or frozen fluid. In one embodiment, first granular substance 160 may inflate or generate a gaseous substance at the target thus facilitating the propagation of second granular substance 170.

Consistent with some embodiments, shelled portion 110E includes a shell 180 that may be in the form of a frozen fluid and another fluid or granular substance 190 contained within. The shell may be made by an environmental friendly material that disintegrates or evaporated at the target. The shell may also be selected for timed application of the effective ingredient at the target, for example by selecting a material for the shell that disintegrated after a predefined time and only then fluid or granular substance 190 is applied to the target. The shell may also be configured to break or open while still in the air prior to the impact with the target so that release of the effective ingredients starts well before the impact so that is some cases the impact is with an empty or nearly empty shell. Consistent with some embodiments, shelled portion 110F includes a shell 130 and fluid or granular substance 120 wherein the shell is shaped as a cube or a prism so that packaging is easier at the expenses of air resistance.

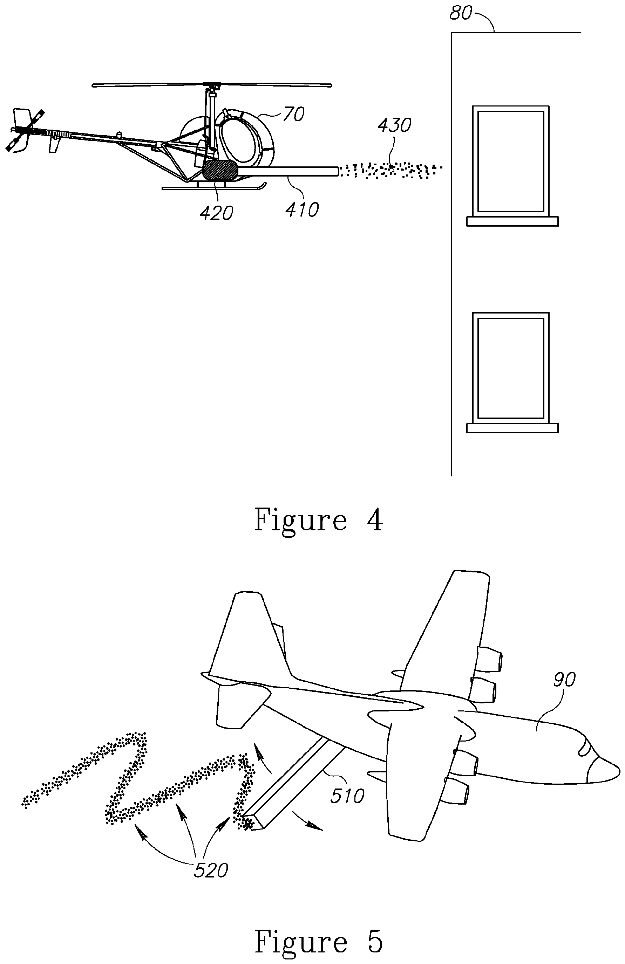

Figure 4 is a schematic diagram illustrating one aspect according to some embodiments of the present invention. An aerial vehicle 70 is shown delivering a load of shelled portions 430 in an upward forward direction towards a target 80. Shelled portions 430 are stored as a payload 420 on aerial vehicle 70 and delivered via a tube 430. It is well understood that shelled portions 430 need not necessarily be delivered from an aerial vehicle as long as they are delivered from a certain height and over the air (e.g., from a tower or from a tube on the ground using pressure).

When dropped on burned trees or vegetation in a wildfire, the shell may break up or being opened up at about 30 feet above the flames and dispense the fluid or granular substance in the shells evenly on the target.

Figure 5 is a schematic diagram illustrating one aspect according to some embodiments of the present invention. An aerial vehicle 90 is shown delivering a load of shelled portions 520 using a sleeve 510 configure to move at any direction in order to control the coverage area of load of shelled portions 520. It is understood that various other methods of discharging shelled portions 520 may be used.

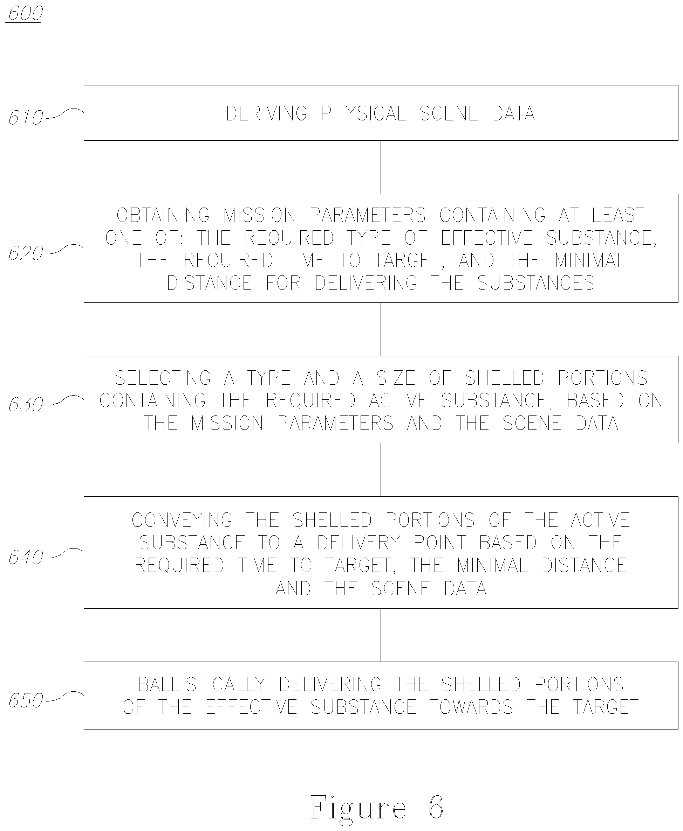

Figure 6 is a high level flowchart illustrating a method according to some embodiments of the present invention. Method 600 takes advantages of the aforementioned shelled portions of various shapes, sizes, and contents and describes a generalized procedure that enables to tailor the specific shelled portions of substance to the requirements of a specific mission and further based on physical attributes of the scene over the target. Any mission of delivery from the air of fluids or granular substance may impose different restrictions such as the optimal location for the point of delivery, timing considerations as well as safety constraints. Thus, method 600 may start up with the stage of deriving physical scene data 610. The physical scene data may be derived from many sources and types of data such as optical, thermal, electromagnetic, and the like. The method may go on to the stage of obtaining the mission parameters 620, possibly from a user who plans the mission. These parameters may include, for example: the required type of effective ingredients, the required density of the effective substance at the target, the elevation over target, the required time to target, and sometimes minimal distance for delivering the substances possibly due to safety reasons. Then, the method goes on to the stage of selecting 620 a type and a size of shelled portions containing the required effective ingredients, based on the mission parameters. The method then goes on to the stage of conveying 630 the shelled portions of the effective substance to a delivery point, based on the required time to target and the minimal distance. In a case of delivery using an aerial vehicle the delivery point is where the aerial vehicle discharges the shelled portions. Finally, the shelled portions are ballistically delivered 640 towards the target.

As will be appreciated by one skilled in the art, some of the steps of method 600 may be embodied as a computer implemented method or computer program product.

Accordingly, aspects of some of the steps of method 600 may take the form of an entirely hardware embodiment, an entirely software embodiment (including firmware, resident software, micro-code, etc.) or an embodiment combining software and hardware.

The delivery may be in such a way that yields a specified footprint at impact height over the target. The delivery may be carried out in various dispensing manners that are selected as to density and form of distribution of the shelled portions. The footprint is thus an effective metric by which the type of delivery may be carried out.

It is understood that the stage of ballistically delivering the shelled portions is carried out naturally once the physical conditions, specifically the size of the shelled portions, are met. It is further understood that by carefully planning the mission and selecting the appropriate type of shelled portions, the specified targets may be reached in the required timing and the required amount of the effective ingredients. The selecting and the planning may be optimized in accordance with the existing variety of the shelled portions and further by optimization methods known in the art in different fields.

In accordance with embodiments of the present invention, the footprint of the shelled portions at the target is controllable and can be planned on a per mission basis. This is due to the repeatability of delivery of the shelled portions, achieved, as explained above by the high ballistic coefficient of the shelled portions. In order to achieve this end, the shelled portions may be homogenous in size, shape and weight. This homogeneity results in a similar ballistic behavior for all shelled portions of a common type. Then, in operation, by selecting mission parameters such as the height and speed of the aerial vehicle at the delivery point, the footprint of the shelled portions at the target can be planned and predicted.

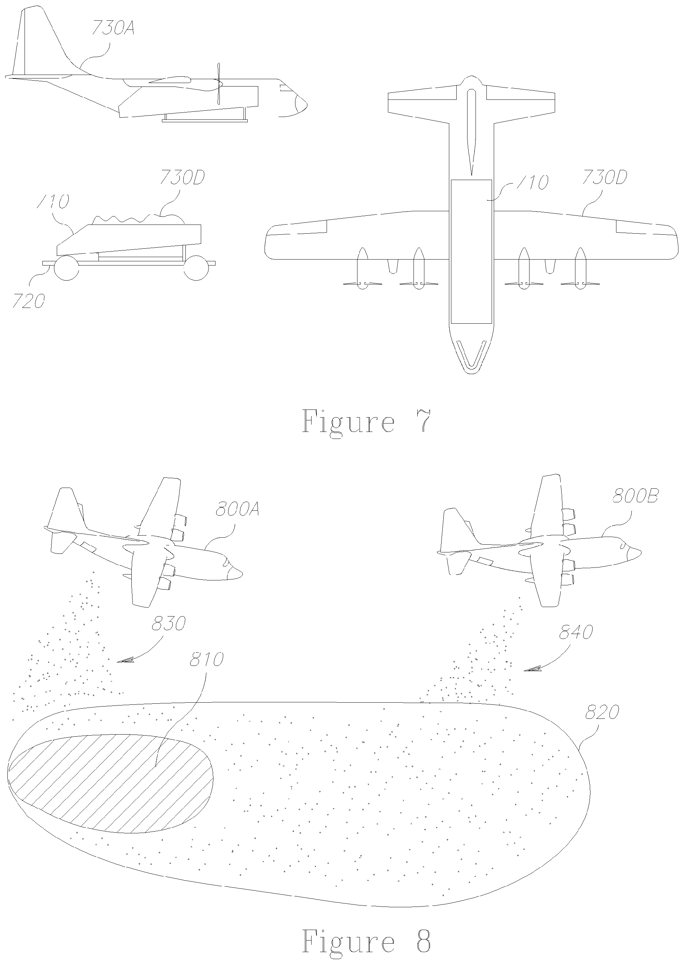

Figure 7 is a schematic diagram showing an exemplary embodiment of an airborne dispenser of the shelled portions of fluids and granular substances in accordance with some embodiments of the present invention. Airborne dispenser 710 is shown on a carriage 720 and further in a cross section within an airplane 730A and in a top view of an airplane 730B. As illustrated, carriage 720 enables the easy loading of dispenser 710 into any aerial vehicle without further adjustments. Dispenser 710 is shaped and configured to be inserted, possibly in modular sections 720 so that the volume of the shelled portions is tailored to the planned mission as well as the carrying capacity of the aerial vehicle. In some embodiments Dispenser 720 may be entered in a matter of few minutes to any standard aircraft and thus convert the standard aircraft into an aircraft that is capable for ballistic delivery of the shelled portions. In order to preserve current delivery methods, dispenser 710 may be configured for dual use so that in one configuration the dispenser is operable to carry on fluids and deliver them in the traditional manner and in another configuration the dispenser is configured to deliver the shelled portions of the present invention.

Additionally, in some embodiments of the present invention, modular sections 720 of dispenser 710 may each contain a different type of shelled portions. Dispenser 710 may be further configured to dispense on a single mission, a plurality of types of shelled portions 100 so that the selection of the types of shells and the effective substance or fluid may be selected on the fly ad so may be the aforementioned stages of method 600 discussed above. This feature may further enhance flexibility of the embodiments of the present invention.

Figure 8 is a schematic diagram showing an exemplary application of some embodiments of the present invention. The diagram shows a dynamic target on the ground which includes a first portion 810 and a second portion 820. First portion 810 may be a target of a first kind (such as active fire or an oil spill in the ocean) and a second portion 820 may be a target of a second kind (such as area soon to be caught by the fire or soon to be contaminated by the oil spill, respectively). In some embodiments of the present invention, it would be possible to tailor the appropriate type of shells and effective substance, to the different types of target as illustrated above, respectively while on a single mission (shelled portions of type 830 are used for target 810 when airplane is in location 800A while shelled portions of type 840 are used for target 820 when airplane is in location 800B. This feature is particularly advantageous when handling a dynamic target being a target that changes it size and its nature over a period of time of the order of a single mission. For example, fire fighting material may be used on the area already caught by fire 810 while fire retardants may be used on an area not yet caught by fire 820.

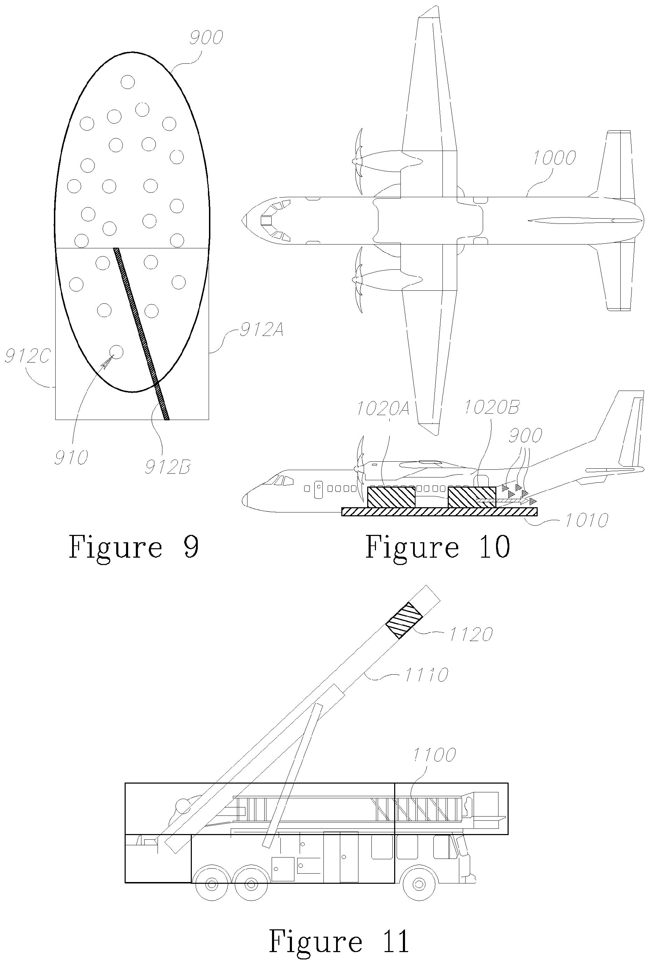

Figure 9 is a schematic drawing illustrating yet another example of the shelled portion in accordance with some embodiments of the present invention. Shelled portion (or pellet) 900 is shown here in the shape of a hollow ellipsoid whose shell is punctured with holes such as hole 910. Pellet 900 further includes several fins 912A-912C located on one end of pellet wherein each one of the fins is slightly tilted along the longitudinal axis of pellet 900 (the tilt angle is exaggerated in the figure for illustrative purposes). Pellets such as pellet 900 may be effectively and easily filled with fluid by grouping together many pellets and submerging them in a container (e.g., within the dispenser apparatus) filled with the fluid containing the effective substance. The fluid then enters through the holes. By selecting the holes to be small enough (depending also on the properties of the fluid) dripping of the fluid is substantially avoided when the pellet is in static position. In operation, pellets are ballistically discharged from the dispenser into the air. Due to gravity forces and fins 912A-912C, pellet 900 starts rotating around its longitudinal axis in an increasing angular speed. Beyond a specific threshold of the angular speed (which can be determined, for example, by the viscosity of the fluid and the size of the holes), the fluid starts exiting or so-called being sprinkled out of pellet 900 until pellet 900 is completely emptied. Pellet 900 can be designed (e.g., size of holes, tilt angle of fins, amount and type of fluid, and the like) in combination with the delivery parameters (e.g., height over target, vehicle velocity and the like) so that pellet 900 is completely emptied prior to impact with the target so as to minimize the hit at the target.

Figure 10 is a schematic drawing illustrating an aerial vehicle equipped with a dispenser in accordance with some embodiments of the present invention. Aerial vehicle 1000 can accommodate on its bottom side, approximately near the wings, a conveyer 1010 positioned along its longitudinal axis. A container 1020 can move freely along conveyer 1010. In order to discharge the aforementioned pellets or other shelled portions discussed herein, container 1020 is being accelerated along conveyer 1010 from position 1020A to position 1020B where the container is brought to a sudden and complete stop. A door in the container is then opened and the shelled portions, or pellets, are forced ballistically out of the container.

Figure 11 is a schematic drawing illustrating a surface vehicle equipped with a dispenser in accordance with some embodiments of the present invention. Similar to the dispenser described above in regards with the aerial vehicle, the dispenser of surface vehicle 1100 includes a conveyer 1110 that may be tilted to reach a specified angle, and a container 1120 that may be moved forward slowly and then brought to a complete and sudden stop. Conveyer 1010 should be sufficiently long so as to enable a minimal acceleration force applied to container 1020 so as not to affect the shells of the pellets. The exact length of conveyer 1010 is determined based on the pellet properties such as the strength of the shell and the size and number of the holes on it. The shelled portions are thus projected from container 1120 with both vertical and horizontal velocities that are selected based on the mission and the location of the target.

By mere way of example, it is understood that many missions may be carried out utilizing embodiments of the present invention. In one embodiment, the mission may be cooling down of nuclear reactors. In such a mission there is significant safety distance. Granular ice may be then used for the cooling. In another embodiment, the mission may be riot control in which the shelled portion may contain non-lethal stinky substance, tear causing substance and the like. In fire fighting, two types may be used as explained above (fire fighting and fire retardant). Similarly, in handling oil spills, one material may be used to dissolve the oil while another substance may be used to hedge the oils spill and reduce its spreading. Many more applications may benefit from advantages of the embodiments of the present invention.

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment. Furthermore, it is to be understood that the invention can be carried out or practiced in various ways and that the invention can be implemented in embodiments other than the ones outlined in the description above.

The invention is not limited to those diagrams or to the corresponding descriptions. For example, flow need not move through each illustrated box or state, or in exactly the same order as illustrated and described.

Meanings of technical and scientific terms used herein are to be commonly understood as by one of ordinary skill in the art to which the invention belongs, unless otherwise defined.

While the invention has been described with respect to a limited number of embodiments, these should not be construed as limitations on the scope of the invention, but rather as exemplifications of some of the preferred embodiments. Other possible variations, modifications, and applications are also within the scope of the invention.

## Claims

1. A method of delivering fluids or granular substances containing required effective ingredients, over the air to a target (20; 810), the method comprising:
loading the required effective ingredients onto a vehicle in the form of shelled portions selected to have a type and size based on mission parameters and physical data of a scene containing the target;
conveying the shelled portions in the vehicle (1000, 1100) to a delivery point, based on the mission parameters and the physical data; and
ballistically delivering the shelled portions from the vehicle towards the target,
wherein the shelled portions each weigh approximately 100 to 300 grams and comprise fluids or granular substances covered by flexible shells (130) that provide to the shelled portions a ballistic coefficient that is significantly higher than a ballistic coefficient of similar portions without the shells (130).

2. The method according to claim 1, further comprising deriving physical data associated with the scene which includes the target (20; 810) from one or more sources, wherein at least some of the sources are independent of each other.

3. The method according to claim 1, wherein the shelled portions are homogeneous in size and weight.

4. The method according to claim 3 wherein the vehicle is an aerial vehicle (1000) and further comprising controlling the footprint of the shelled portions at the target by selecting mission parameters including the height and speed of the vehicle at the delivery point.

5. The method according to claim 1, further comprising targeting the delivering of the shelled portions towards the target using optical targeting means that predicts impact area for the shelled portions at any given time.

6. The method according to claim 1, wherein the shelled portions comprise a shell (130) that is made of bio-degradable or compostable materials.

7. The method according to claim 1, wherein the shelled portions comprise a shell (130) that is configured to break prior to impact with the target so as to release at least some of the effective ingredients prior to the impact with the target.

8. The method according to claim 1, wherein the shelled portions contain two or more substances that are arranged to interact upon hitting the target or prior to the hitting due to rotational forces.

9. The method according to claim 1, wherein the shelled portions contain two or more substances, and wherein one of the two or more substances is arranged to generate a gaseous substance or foam upon impact at target or prior to the impact.

10. The method according to claim 1, wherein the ballistically delivering is carried out by an aerial vehicle (1000).

11. The method according to claim 10, wherein different types of shelled portions are loaded onto the vehicle and wherein the selecting is carried out during flight of the aerial vehicle.

12. The method according to claim 10, wherein the loading is performed using a dispenser that is arranged to fit into a plurality of types of aerial vehicles.

13. The method according to claim 1, wherein the ballistically delivering of the shelled portions is carried out using a dispenser that comprises a conveyer and a container that contains the shelled portions and wherein the dispenser is configured to accelerate the container along the conveyer and then bring the container to a complete and sudden stop so as to force the shelled portions ballistically out of the container.

14. The method according to claim 1, wherein each one of the shelled portions includes holes going through the shell and tilted fins located at one end of the shell designed such that during the ballistic delivery, the shelled portions rotate around their longitudinal axis at an increasing angular speed which results in the fluid exiting the shelled portion.

15. A system for delivering over the air, shelled portions of fluids or granular substances containing effective ingredients to a target according to the method of any preceding claim, the system comprising:
shelled portions each weigh approximately 100 to 300 grams and comprise fluids or granular substances covered by flexible shells that provide to the shelled portions a ballistic coefficient that is significantly higher than a ballistic coefficient of similar portions without the shells;
a vehicle configured to convey the shelled portions to a delivery point based on the mission parameters and the physical data; and
a dispenser configured to ballistically deliver the shelled portions towards the target.

## Patentansprüche

1. Verfahren zur Abgabe von Fluiden oder granularen Stoffen, die erforderliche Wirkstoffe enthalten, über die Luft an ein Ziel (20; 810), wobei das Verfahren Folgendes umfasst:
Laden der erforderlichen Wirkstoffe auf ein Fahrzeug in Form von ummantelten Portionen, die ausgewählt sind, dass sie eine Art und Größe basierend auf Einsatzparametern und physikalischen Daten einer Szenerie, die das Ziel enthält, aufweisen;
Befördern der ummantelten Portionen in dem Fahrzeug (1000, 1100) zu einer Abgabestelle basierend auf den Einsatzparametern und den physikalischen Daten; und
ballistisches Abgeben der ummantelten Portionen aus dem Fahrzeug an das Ziel,
wobei die ummantelten Portionen jeweils ungefähr 100 bis 300 Gramm wiegen und Fluide oder granulare Stoffe umfassen, die von flexiblen Ummantelungen (130) bedeckt sind, die den ummantelten Portionen einen ballistischen Koeffizienten bereitstellen, der signifikant höher als ein ballistischer Koeffizient ähnlicher Portionen ohne die Ummantelungen (130) ist.

2. Verfahren nach Anspruch 1, weiter umfassend Ableiten von mit der Szenerie, die das Ziel (20; 810) enthält, verbundenen physikalischen Daten, aus einer oder mehreren Quellen, wobei mindestens einige der Quellen voneinander unabhängig sind.

3. Verfahren nach Anspruch 1, wobei die ummantelten Portionen bezüglich Größe und Gewicht homogen sind.

4. Verfahren nach Anspruch 3, wobei das Fahrzeug ein Luftfahrzeug (1000) ist, und weiter umfassend Steuern des Profils der ummantelten Portionen am Ziel durch Auswählen von Einsatzparametern einschließlich der Höhe und Geschwindigkeit des Fahrzeugs an der Abgabestelle.

5. Verfahren nach Anspruch 1, weiter umfassend Richten der Abgabe der ummantelten Portionen auf das Ziel unter Verwendung eines optischen Zielmittels, das den Aufprallbereich für die ummantelten Portionen zu einem beliebigen Zeitpunkt vorhersagt.

6. Verfahren nach Anspruch 1, wobei die ummantelten Portionen eine Ummantelung (130) umfassen, die aus biologisch abbaubaren oder kompostierbaren Materialien hergestellt ist.

7. Verfahren nach Anspruch 1, wobei die ummantelten Portionen eine Ummantelung (130) umfassen, die so konfiguriert ist, dass sie vor dem Aufprall auf das Ziel aufbricht, um mindestens etwas der Wirkstoffe vor dem Aufprall auf das Target freizusetzen.

8. Verfahren nach Anspruch 1, wobei die ummantelten Portionen zwei oder mehr Stoffe enthalten, die so angeordnet sind, dass sie beim Auftreffen auf das Target oder aufgrund von Rotationskräften vor dem Auftreffen wechselwirken.

9. Verfahren nach Anspruch 1, wobei die ummantelten Portionen zwei oder mehr Stoffe enthalten und wobei einer der zwei oder mehr Stoffe zum Erzeugen eines gasförmigen Stoffes oder Schaumstoffs nach dem Aufprall auf das Ziel oder vor dem Aufprall angeordnet ist.

10. Verfahren nach Anspruch 1, wobei die ballistische Abgabe durch ein Luftfahrzeug (1000) erfolgt.

11. Verfahren nach Anspruch 10, wobei verschiedene Arten von ummantelten Portionen auf das Fahrzeug geladen werden und wobei das Auswählen während des Fluges des Luftfahrzeugs erfolgt.

12. Verfahren nach Anspruch 10, wobei das Beladen unter Verwendung einer Ausgabevorrichtung durchgeführt wird, die so angeordnet ist, dass sie in eine Vielzahl von Luftfahrzeugtypen passt.

13. Verfahren nach Anspruch 1, wobei das ballistische Abgeben der ummantelten Portionen unter Verwendung einer Ausgabevorrichtung ausgeführt wird, die einen Förderer und einen die ummantelten Portionen enthaltenden Behälter umfasst und wobei die Ausgabevorrichtung so konfiguriert ist, dass sie den Behälter entlang des Förderers beschleunigt und dann den Behälter zu einem vollständigen und plötzlichen Stopp bringt, um die ummantelten Portionen ballistisch aus dem Behälter zu zwingen.

14. Verfahren nach Anspruch 1, wobei jeder der ummantelten Portionen Löcher enthält, die durch die Ummantelung gehen, und geneigte Rippen, die sich an einem Ende der Schale befinden und so ausgelegt sind, dass sich die ummantelten Portionen während der ballistischen Abgabe um ihre Längsachse mit steigender Winkelgeschwindigkeit drehen, was dazu führt, dass das Fluid aus der ummantelten Portion austritt.

15. System zum Abgeben von ummantelten Portionen von Fluiden oder granularen Stoffen, die Wirkstoffe enthalten, an ein Ziel nach dem Verfahren nach einem der vorhergehenden Ansprüche, wobei das System Folgendes umfasst:
ummantelte Portionen, die jeweils ungefähr 100 bis 300 Gramm wiegen und Fluide oder granulare Stoffe umfassen, die von flexiblen Ummantelungen bedeckt sind, die den ummantelten Portionen einen ballistischen Koeffizienten bereitstellen, der signifikant höher als ein ballistischer Koeffizient ähnlicher Portionen ohne die Ummantelungen ist;
ein Fahrzeug, das konfiguriert ist, um die ummantelten Portionen basierend auf den Einsatzparametern und den physikalischen Daten zu einer Abgabestelle zu befördern; und
eine Ausgabevorrichtung, die konfiguriert ist, um die ummantelten Portionen ballistisch an ein Ziel abzugeben.

## Revendications

1. Procédé de distribution de fluides ou de substances granulaires contenant des ingrédients efficaces requis, par voie aérienne vers une cible (20 ; 810), le procédé comprenant :
le chargement des ingrédients efficaces requis sur un véhicule sous la forme de parties à enveloppe sélectionnées pour avoir un type et une taille sur la base de paramètres de mission et de données physiques d'une scène contenant la cible ;
l'acheminement des parties à enveloppe dans le véhicule (1000, 1100) vers un point de distribution, sur la base des paramètres de mission et des données physiques ; et
distribuer balistiquement les parties à enveloppe du véhicule vers la cible,
dans lequel les parties à enveloppe pèsent chacune approximativement 100 à 300 grammes et comprennent des fluides ou des substances granulaires couvertes par des enveloppes souples (130) qui fournissent aux parties à enveloppe un coefficient balistique qui est significativement plus élevé qu'un coefficient balistique de parties similaires sans les enveloppes (130).

2. Procédé selon la revendication 1, comprenant en outre la dérivation de données physiques associées à la scène qui comprend la cible (20 ; 810) à partir d'une ou plusieurs sources, dans lequel au moins certaines des sources sont indépendantes les unes des autres.

3. Procédé selon la revendication 1, dans lequel les parties à enveloppe sont homogènes en taille et en poids.

4. Procédé selon la revendication 3, dans lequel le véhicule est un véhicule aérien (1000) et comprenant en outre la commande de l'empreinte des parties à enveloppe au niveau de la cible en sélectionnant des paramètres de mission comprenant la hauteur et la vitesse du véhicule au niveau du point de distribution.

5. Procédé selon la revendication 1, comprenant en outre le ciblage de la distribution des parties à enveloppe vers la cible à l'aide d'un moyen de ciblage optique qui prédit une zone d'impact pour les parties à enveloppe à n'importe quel moment donné.

6. Procédé selon la revendication 1, dans lequel les parties à enveloppe comprennent une enveloppe (130) qui est constituée de matériaux biodégradables ou compostables.

7. Procédé selon la revendication 1, dans lequel les parties à enveloppe comprennent une enveloppe (130) qui est configurée pour se rompre avant l'impact avec la cible de façon à libérer au moins une partie des ingrédients efficaces avant l'impact avec la cible.

8. Procédé selon la revendication 1, dans lequel les parties à enveloppe contiennent deux substances ou plus qui sont disposées pour interagir en atteignant la cible ou avant de l'atteindre, en raison de forces de rotation.

9. Procédé selon la revendication 1, dans lequel les parties à enveloppe contiennent deux substances ou plus, et dans lequel une des deux substances ou plus est configurée pour générer une substance gazeuse ou une mousse lors d'un impact au niveau d'une cible ou avant l'impact.

10. Procédé selon la revendication 1, dans lequel la distribution balistique est effectuée par un véhicule aérien (1000).

11. Procédé selon la revendication 10, dans lequel différents types de parties à enveloppe sont chargés sur le véhicule et dans lequel la sélection est effectuée pendant le vol du véhicule aérien.

12. Procédé selon la revendication 10, dans lequel le chargement est effectué à l'aide d'un distributeur qui est configuré pour s'ajuster dans une pluralité de types de véhicules aériens.

13. Procédé selon la revendication 1, dans lequel la distribution balistique des parties à enveloppe est effectuée à l'aide d'un distributeur qui comprend un transporteur et d'un conteneur qui contient les parties à enveloppe et dans lequel le distributeur est configuré pour accélérer le conteneur le long du transporteur, puis pour amener le conteneur à s'arrêter complètement et brusquement de façon à expulser de force les parties à enveloppe du conteneur.

14. Procédé selon la revendication 1, dans lequel chacune des parties à enveloppe comprend des trous traversant l'enveloppe et des ailettes inclinées situées à une extrémité de l'enveloppe, conçus de telle sorte que, pendant la distribution balistique, les parties à enveloppe tournent autour de leur axe longitudinal à une vitesse angulaire croissante qui entraîne la sortie du fluide de la partie à enveloppe.

15. Système de distribution par voie aérienne de parties à enveloppe de fluides ou de substances granulaires contenant des ingrédients efficaces vers une cible selon le procédé de l'une quelconque des revendications précédentes, le système comprenant :
des parties à enveloppe pesant chacune approximativement 100 à 300 grammes et comprenant des fluides ou des substances granulaires couvertes par des enveloppes souples qui fournissent aux parties à enveloppe un coefficient balistique qui est significativement plus élevé qu'un coefficient balistique de parties similaires sans les enveloppes ;
un véhicule conçu pour acheminer les parties à enveloppe à un point de distribution sur la base des paramètres de mission et des données physiques ; et
un distributeur conçu pour distribuer balistiquement les parties à enveloppe vers la cible.
